(19) Europäisches Patentamt / European Patent Office / Office européen des brevets

(11) **EP 3 194 556 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(21) Anmeldenummer: **15770821.5**

(22) Anmeldetag: **03.09.2015**

(51) Int Cl.:
*C11D 11/02* (2006.01)   *B01J 2/04* (2006.01)

(86) Internationale Anmeldenummer:
**PCT/EP2015/070107**

(87) Internationale Veröffentlichungsnummer:
**WO 2016/041778 (24.03.2016 Gazette 2016/12)**

(54) **VERFAHREN ZUR HERSTELLUNG VON SPRÜHGETROCKNETEN WASCHMITTELPULVERN**

METHOD FOR PRODUCING SPRAY-DRIED DETERGENT POWDERS

PROCÉDÉ DE FABRICATION DE POUDRES DE DÉTERGENT SÉCHÉES PAR PULVÉRISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2014 DE 102014218805**

(43) Veröffentlichungstag der Anmeldung:
**26.07.2017 Patentblatt 2017/30**

(73) Patentinhaber: **Henkel AG & Co. KGaA 40589 Düsseldorf (DE)**

(72) Erfinder:
• **ORLICH, Bernhard**
  **40547 Düsseldorf (DE)**
• **ROEHR, Dirk**
  **42799 Leichlingen (DE)**
• **LARSON, Bernd**
  **41812 Erkelenz (DE)**
• **RUPPRECHT, Udo**
  **45896 Gelsenkirchen (DE)**
• **HAMMELSTEIN, Stefan**
  **40591 Düsseldorf (DE)**
• **MARKIEFKA, Josef**
  **41470 Neuss (DE)**

(56) Entgegenhaltungen:
EP-A1- 0 763 594          WO-A1-2013/181205
DE-A1- 2 519 655          DE-A1-102005 063 064
US-A1- 2006 211 592

**Beschreibung**

Die vorliegende Erfindung betrifft ein Verfahren zur Herstellung von sprühgetrockneten Waschmittelpulvern von geringer Dichte und niedrigem Schüttgewicht. Des Weiteren richtet sich die vorliegende Erfindung auf Waschmittelpulver, die nach dem erfindungsgemäßen Verfahren hergestellt wurden.

Sprühtrocknung ist das Standardverfahren zur Herstellung von Waschmittelbasispulver. Üblicherweise werden die Inhaltsstoffe des Waschmittels in einem Mixer mit Wasser gemischt, wobei eine wässrige Aufschlämmung entsteht. Die resultierende Aufschlämmung wird dann durch ein Rohrleitungssystem zu einem Pumpsystem bestehend aus einer oder mehreren (Hochdruck-)Pumpen und dann weiter zu einer Sprühdüse geleitet. Je nach Art des Systems und der verwendeten Pumpen, wird die wässrige Waschmittelaufschlämmung dann unter erhöhtem Druck durch die Sprühdüse in einen Sprühtrocknungsturm gesprüht, wodurch sie getrocknet und sprühgetrocknetes Pulver erhalten wird.

Die Verbraucher sind daran gewöhnt, eine bestimmte Menge an Waschmittelpulver pro Waschgang zu dosieren. Ist die Dichte des Waschmittelpulvers zu hoch, besteht daher eine Tendenz zur Überdosierung. Es ist somit wünschenswert, Waschmittelpulver mit einer geringen Dichte herzustellen, die eine verbraucherfreundliche Anwendung sicherstellen.

Es ist im Stand der Technik bekannt, Stickstoff-reiches Gas in die Waschmittelaufschlämmung einzuleiten, wodurch es zur Bildung von Gasblasen in der wässrigen Aufschlämmung kommt. Die Einarbeitung des Gases in die Waschmittelaufschlämmung geschieht z.B. im Mischer (durch starkes Rühren oder einen Begasungsrührer) oder durch Zuführung zwischen der Vordruck- und der Hochdruckpumpe bei Drücken < 8 bar (WO 2013/181205 A1). Nach Entlassen der unter Druck stehenden, gashaltigen wässrigen Aufschlämmung durch die Sprühdüse in den Sprühtrocknungsturm entstehen Partikel, die in ihrem Innern Gasbläschen einschließen, wodurch die Dichte und das Schüttgewicht der Partikel verringert wird. Weitere Sprühtrocknungsverfahren zur Herstellung fester Waschmittel werden in den deutschen Offenlegungsschriften DE 25 19 655, DE 10 2005 063 064 A1, der internationalen Patentanmeldung WO 2013/181205 A1 und der europäischen Patentanmeldung EP 763 594 A1 beschrieben.

Ein technisches Problem liegt in der geringen Effizienz, mit der das Gas in die unter Druck stehende wässrige Aufschlämmung eingeschlossen werden kann. Bedingt durch technisch nicht zu vermeidende, leichte Schwankungen des durch die Pumpe(n) aufgebauten Druckniveaus innerhalb des Rohrleitungssystems kommt es nach Einleitung des Gases in die wässrige Waschmittelaufschlämmung zu Unregelmäßigkeiten bezüglich Gehalt und Verteilung des eingeschlossenen Gases, was wiederum in Unregelmäßigkeiten bezüglich Dichte, Größe und Form der sprühgetrockneten Partikel resultiert.

Es besteht folglich Bedarf an einem Verfahren zur Herstellung von Waschmittelpulvern mit anwenderfreundlich geringer Dichte und regelmäßiger Partikeldichte sowie -größe.

Es wurde nun gefunden, dass das Einleiten von Gas in eine wässrige Waschmittelaufschlämmung direkt vor einem oder direkt in einen Pulsationsdämpfer (Windkessel) in eine Rohrleitung, die einer Hochdruckpumpe nachgeschaltet ist, in einer verbesserten Homogenisierung der eingeleiteten Gasblasen in der wässrigen Waschmittelaufschlämmung resultiert.

Gegenstand der vorliegenden Erfindung ist daher ein Verfahren zur Herstellung von sprühgetrocknetem Waschmittelpulver, wobei das Verfahren die folgenden Schritte umfasst:

a) Herstellen einer wässrigen Waschmittelaufschlämmung in einem Mixer,
b) Überführen der wässrigen Waschmittelaufschlämmung aus dem Mixer in ein Rohrleitungssystem, welches zu einer Hochdruckpumpe und von der Pumpe zu einer Sprühdüse führt,
c) Einleiten von Gasen in die im Rohrleitungssystem befindliche wässrige Waschmittelaufschlämmung an einer der Hochdruckpumpe nachgeschalteten Stelle vor einem oder direkt in einen Pulsationsdämpfer (Windkessel),
d) Sprühen der wässrigen, gashaltigen Waschmittelaufschlämmung durch die Sprühdüse in einen Sprühturm, und
e) Sprühtrocknen der gashaltigen Waschmittelaufschlämmung, um ein sprühgetrocknetes Waschmittelpulver zu erhalten.

Ein weiterer Gegenstand der vorliegenden Erfindung ist darüber hinaus ein sprühgetrocknetes Waschmittelpulver, welches mittels des erfindungsgemäßen Verfahrens hergestellt wurde.

Die Waschmittelpulver der vorliegenden Erfindung können als Wasch- oder Reinigungsmittel verwendet werden oder in Wasch- oder Reinigungsmitteln eingesetzt werden.

"Mindestens", wie hierin im Zusammenhang mit einem Zahlenwert verwendet, bezieht sich auf genau diesen Zahlenwert oder mehr. "Mindestens ein" bedeutet somit 1 oder mehr, d.h. beispielsweise 2, 3, 4, 5, 6, 7, 8, 9, 10 oder mehr.

"Vor", wie hierin in Bezug auf das Verfahren als räumliche Definition verwendet, bedeutet von einer Referenzstelle gesehen stromaufwärts, d.h. entgegen der Flussrichtung der Aufschlämmung.

"Nach", wie hierin in Bezug auf das Verfahren als räumliche Definition verwendet, bedeutet von einer Referenzstelle gesehen stromabwärts, d.h. in Flussrichtung der Aufschlämmung.

Die in den hierin beschriebenen Verfahren herstellbaren Waschmittel umfassen alle denkbaren festen Waschmittelarten zum Einsatz in der Waschmaschine. Dazu gehören beispielsweise Waschmittel für Textilien, Teppiche, oder Naturfasern, für die die Bezeichnung Waschmittel verwendet wird. Ferner können auch Waschhilfsmittel, die bei der maschinellen Textilwäsche zum eigentlichen Waschmittel hinzudosiert werden, um eine weitere Wirkung zu erzielen, hergestellt werden, sofern sie in fester Form vorliegen. Ebenfalls umfasst sind feste Reinigungsmittel.

Die hierin beschriebenen Waschmittelpulver sind typischerweise Granulate. "Granulat", wie hierin verwendet, bezieht sich allgemein auf eine feste Konfektionierungsform, die aus vielen kleinen, festen diskreten Partikeln oder Granulatkörnern (Granalien, Granula) bestehen. Die Partikel können aus Reinstoffen oder Stoffgemischen bestehen. In ihrer Summe werden diese als Granulat bezeichnet. Granulate weisen in der Regel keine harmonisch geometrische Form auf; ihre Oberfläche kann eher glatt, uneben oder sogar zackig sein. Die Masse ist in vielen Fällen mehr oder weniger porös. Bevorzugt handelt es sich um Granulate, deren Granulatkörner eine weitgehend einheitliche Größe und/oder annähernd eine sphärische Form aufweisen.

Dem Verfahren zur Herstellung von Waschmittelpulvern im Sinne der vorliegenden Erfindung liegt die im Stand der Technik allgemein bekannte Turm-Sprühtrocknungstechnik zu Grunde. Dabei wird die wässrige Waschmittelaufschlämmung, die die Grundlage für das jeweilige herzustellende Waschmittel ist und die in ihrer Zusammensetzung variieren kann, in einem Behältnis zur Mischung (Mixer) vorgefertigt. Über ein angeschlossenes Rohrleitungssystem wird die entstandene Aufschlämmung bis zu einer Sprühdüse geleitet, durch welche die Aufschlämmung unter Druck in einen Trocknungsturm entlassen wird. Die Sprühdüse verteilt die wässrige Waschmittelaufschlämmung in Form feiner (Granulat)Partikel, die im Zuge dessen sprühgetrocknet werden und am Boden des Trocknungsturms aufgeschüttet und gesammelt werden. Auf dem Weg vom Mixer bis zur Sprühdüse durchläuft die Waschmittelaufschlämmung mindestens eine oder mehrere Pumpen, welche die Aufschlämmung unter erhöhtem Druck durch die nachgeschaltete Rohrleitung pressen. In bevorzugten Ausführungsformen liegt der Druck im Rohrleitungssystem zwischen der letzten Pumpe und der Sprühdüse im Bereich von 10 - 80 bar. Bei der/den Pumpen handelt es sich um mindestens eine Hochdruckpumpe. Um die Dichte der entstehenden Granulatpartikel zu vermindern, wird ein Gas in die wässrige Waschmittelaufschlämme eingeleitet, und zwar nachdem diese die mindestens eine Hochdruckpumpe durchlaufen hat und folglich unter Druck steht.

Die Einleitung erfolgt in die Rohrleitung direkt vor einem oder direkt in einen Pulsationsdämpfer bzw. Windkessel, welcher in der Rohrleitung zwischen Hochdruckpumpe und Sprühdüse angeordnet ist und zur Regulation von Druckschwankungen geeignet ist. Dieser Windkessel ist ein Druckbehälter, der Gas, insbesondere Luft enthält, und dient üblicherweise dazu, die technisch bedingten Schwankungen des durch die Pumpe(n) aufgebauten Druckniveaus innerhalb des Rohrleitungssystems zumindest teilweise auszugleichen. Ursache dieser unerwünschten Druckschwankungen sind Pulsationen der Pumpe. Die Einleitung über diesen Windkessel hat daher den Vorteil, dass in dem nachfolgenden Bereich des Rohrleitungssystems (in Flussrichtung) in Richtung der Sprühdüse die Druckschwankungen abnehmen und daher Unregelmäßigkeiten hinsichtlich Gehalt und Verteilung des eingeschlossenen Gases verringert werden können. Ferner werden durch die Kombination eines Pulsationsdämpfers und einer Gaseinleitungseinrichtung an einer einzigen Stelle im Rohrleitungssystem zusätzliche Perturbationsquellen, die unerwünschte Veränderungen im Druckniveau innerhalb des Rohrleitungssystems und daraus resultierende Inhomogenitäten der wässrigen Waschmittelaufschlämmung zur Folge haben könnten, vermieden.

Generell kann die Stelle, an der das Gas vor oder direkt in den Windkessel in die wässrige Aufschlämmung eingeleitet wird, der Hochdruckpumpe unmittelbar nachgeschaltet und möglichst weit entfernt von der Sprühdüse gelegen sein. Das ist auch im Hinblick auf die Vermeidung von Druckschwankungen besonders vorteilhaft. Dadurch wird ein möglichst gründliches Durchmischen der mit Gas vermischten Aufschlämmung auf dem Weg von der Einleitungsstelle durch das Rohrleitungssystem nach oben zur Sprühdüse gewährleistet, wobei gleichzeitig Unregelmäßigkeiten in der Gasverteilung in der Aufschlämmung durch die technisch bedingten, durch die Pumpe verursachten Druckschwankungen weitgehend vermieden werden.

Die in der Schlämme eingeschlossenen Bläschen können sich auf diese Weise möglichst gleichmäßig verteilen, wodurch sprühgetrocknete Granulatpartikel von gleichmäßiger Größe und Dichte sowie generell geringer Dichte hergestellt werden können. Die vorliegende Erfindung erlaubt es also, die Größe und die Dichte des sprühgetrockneten Partikels besser einzustellen. Dies ist gerade bei der Kombination mit anderen Partikeln wichtig, um die Entmischung von Teilchenmischungen zu vermeiden. Nach diesem Verfahren hergestellte Waschmittelpulver sorgen daher bei abgestimmter Kombination mit anderen Partikeln für eine geringere Entmischung und mehr Homogenität der finalen Waschmittel. Dies hat auch für den Konsumenten Auswirkungen, da damit die Waschleistung über längere Zeiten stabil bleibt. Auch optisch verbleibt das Waschmittel länger in dem Zustand, in dem der Kunde es erworben hat.

So beinhaltet das erfindungsgemäße Verfahren zur Herstellung von sprühgetrockneten Waschmittelpulver somit a) das Herstellen einer wässrigen Waschmittelaufschlämmung in einem Mixer, das b) Überführen der wässrigen Waschmittelaufschlämmung aus dem Mixer in ein Rohrleitungssystem, welches zu einer Hochdruckpumpe und von der Pumpe zu einer Sprühdüse führt, das c) Einleiten von Gasen in die wässrige Waschmittelaufschlämmung im Rohrleitungsbereich an einer der der Hochdruckpumpe nachgeschalteten Stelle vor einem oder in einen Windkessel, das d) Sprühen der wässrigen, gashaltigen Waschmittelaufschlämmung durch die Sprühdüse, und e) Sprühtrocknen der gashaltigen Waschmittelaufschlämmung, wodurch ein sprühgetrocknetes Waschmittelpulver entsteht.

Das Herstellen der wässrigen Waschmittelaufschlämmung in Schritt a) kann in jedem geeigneten Behälter erfolgen, wie zum Beispiel einem Mixer, mit an sich im Stand der Technik bekannten Verfahren. Der Mischer kann ein vertikaler Mischer, ein Aufschlämmungsmischer oder ein Tankrührwerk sein. Geeignete Mixer sowie deren entsprechende Verwendung sind im Stand der Technik bekannt. Die Aufschlämmung hat vorzugsweise einen Wassergehalt von maximal 35 Gew.-%, d.h. die Feststoffgehalte sind 65 Gew.-% und mehr, insbesondere 65 bis 75 Gew.-%. Die Viskosität der Aufschlämmung liegt in bevorzugten Ausführungsformen bei mindestens 10 Pa s, besonders bevorzugt jedoch deutlich über 10 Pa s. (Brookfield Viskosität, Spindel 5, 10 rpm bei 50°C)

In Schritt b) wird die wässrige Aufschlämmung durch ein Rohrleitungssystem geleitet. Der Transport der Aufschlämmung erfolgt über eine oder mehrere Pumpen, insbesondere mindestens eine Hochdruckpumpe, die die Aufschlämmung zur Sprühdüse pumpt. Der Hochdruckpumpe können eine oder mehrere andere Pumpen vorgeschaltet sein. Die erste Pumpe nach dem Mischer kann ein Niederdruckpumpe sein, wie zum Beispiel eine Pumpe, die einen Druck von 3 bis 10 bar erzeugt. Die nachgeschaltete Hochdruckpumpe erzeugt dann einen Druck von 10 bis 100 bar, typischerweise 10 bis 80 bar. Die Aufschlämmung kann optional auch durch einen Disintegrator geleitet werden, wobei dieser vor oder hinter der Pumpe/den Pumpen, vorzugsweise aber zwischen 2 Pumpen angeordnet sein kann.

Es ist bevorzugt, dass das Verfahren kontinuierlich durchgeführt wird.

In Schritt c) wird das Gas in die Aufschlämmung, die sich im Rohrleitungssystem befindet, an einer der Hochdruckpumpe nachgeschalteten Stelle der Rohrleitung vor einem Windkessel bzw. direkt in den Windkessel eingeleitet. Bei dem zur Einleitung in die wässrige Waschmittelaufschlämmung verwendeten Gas kann es sich um ein Stickstoff-haltiges Gas handeln, insbesondere eines, das mehr als 50 Vol.-% Stickstoff enthält, wie beispielsweise Luft. Mit "Luft" ist hierin atmosphärische Luft gemeint. Aber auch andere Gase wie $N_2$, $O_2$, Argon oder Helium oder Mischungen davon sowie Mischungen der vorgenannten mit anderen geeigneten Gasen sind verwendbar. In besonders bevorzugten Ausführungsformen ist das einzuleitende Gas aber ein Stickstoff-haltiges Gas, insbesondere Luft. Das Gas kann über einen Gasverteiler eingeleitet werden.

In bevorzugten Ausführungsformen liegt der Druck des in die wässrige Waschmittelaufschlämmung einzuleitenden Gases 3 - 30 bar über dem Maximaldruck der wässrigen Waschmittelaufschlämmung im Rohrleitungsbereich zwischen Hochdruckpumpe und Sprühdüse. Dies stellt sicher, dass ausreichende Mengen an Gas in die ebenfalls unter Druck stehende Waschmittelaufschlämmung eingebracht werden können, um die Dichte der resultierenden Waschmittelpartikel gering und das Schüttgewicht des Waschmittelpulvers somit niedrig zu halten.

"Gering", wie hierin bezogen auf die Dichte des Waschmittelpulvers verwendet, bezieht sich auf Dichten von 80 - 350 g/l.

"Niedrig", wie hierin bezogen auf das Schüttgewicht des Waschmittelpulvers verwendet, bezieht sich auf Schüttgewichtsverringerungen gegenüber dem Schüttgewicht von Pulvern ohne Gaseinleitung von bis zu 300g/l.

In verschiedenen Ausführungsformen der vorliegenden Erfindung beträgt die Gasmenge, die in die wässrige Waschmittelaufschlämmung eingeleitet wird, nicht mehr als 10 kg/t wässriger Waschmittelaufschlämmung.

Die Flussrate der Aufschlämmung in der Rohrleitung beträgt typischerweise 500 bis 50000 kg/h, was je nach angepasstem Rohrleitungsdurchmesser einer typischen Geschwindigkeit von 0,01 bis 1,3 m/sec entspricht..

In Schritt d) wird die Aufschlämmung, die das Gas enthält, durch eine Sprühdüse in einen Sprühturm gesprüht. Die Temperatur der Aufschlämmung beträgt zu diesem Zeitpunkt vorzugsweise 60 bis 140 °C. Der Druck beträgt hierbei typischerweise etwa 10 bis 80 bar. Geeignete Sprühtürme sind Gleich- und Gegenstromtürme, wobei die Trocknung über Heißgas im Gleich- bzw. Gegenstrom erfolgt. Vorzugsweise erfolgt die Trocknung im Gegenstromsprühturm.

In Schritt e) werden die durch die Sprühdüse in den Sprühturm gesprühten Tröpfchen/Partikel der Aufschlämmung getrocknet um das Waschmittelpulver/-granulat zu ergeben. Die Temperatur der Abluft beträgt hierbei typischerweise 60 bis 100 °C.

Die erfindungsgemäß hergestellten, sprühgetrockneten Waschmittelpulver können alle bekannten und in derartigen Mitteln üblichen Inhaltsstoffe enthalten, insbesondere Tenside und Tensidmischungen, Gerüststoffe, Bleichmittel, Enzyme, Elektrolyte, nichtwässrigen Lösungsmittel, pH-Stellmittel, Parfüme, Parfümträger, Fluoreszenzmittel, Farbstoffe, Hydrotrope, Schauminhibitoren, Silikonöle, Antiredepositionsmittel, Vergrauungsinhibitoren, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, weichmachenden Komponenten sowie UV-Absorber.

Die Waschpulver können ein oder mehrere Tenside enthalten, wobei insbesondere anionische Tenside, nichtionische Tenside und deren Gemische in Frage kommen, aber auch kationische und/oder amphotere Tenside enthalten sein können. Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkyl-aminen, vicinalen Diolen, Fettsäureestern und Fettsäureami-den, die hinsichtlich

4

des Alkylteils den genannten langkettigen Fettsäureestern und Fettsäureami-den, die hinsichtlich des Alkylteils den genannten langkettigen Alkoholderivaten entsprechen, sowie von Alkylphenolen mit 5 bis 12 C-Atomem im Alkylrest brauchbar.

Geeignete anionische Tenside sind insbesondere Seifen und solche, die Sulfat- oder SulfonatGruppen mit bevorzugt Alkaliionen als Kationen enthalten. Verwendbare Seifen sind bevorzugt die Alkalisalze der gesättigten oder ungesättigten Fettsäuren mit 12 bis 18 C-Atomen. Derartige Fettsäuren können auch in nicht vollständig neutralisierter Form eingesetzt werden. Zu den brauchbaren Tensiden des Sulfat-Typs gehören die Salze der Schwefelsäurehalbester von Fettalkoholen mit 12 bis 18 C-Atomen und die Sulfatierungsprodukte der genannten nichtionischen Tenside mit niedrigem Ethoxylierungsgrad. Zu den verwendbaren Tensiden vom Sulfonat-Typ gehören lineare Alkylbenzolsulfonate mit 9 bis 14 C-Atomen im Alkylteil, Alkansulfonate mit 12 bis 18 C-Atomen, sowie Olefinsulfonate mit 12 bis 18 C-Atomen, die bei der Umsetzung entsprechender Monoolefine mit Schwefeltrioxid entstehen, sowie alpha-Sulfofettsäureester, die bei der Sulfonierung von Fettsäuremethyl- oder -ethylestern entstehen.

Die wässrige Waschmittelaufschlämmung enthält typischerweise Bestandteile, die ausgewählt werden aus Gerüststoffen, Tensiden, pH-Stellmitteln, insbesondere Alkalinitätsquellen, und hat üblicherweise einen pH-Wert im alkalischen Bereich, d.h. von 7 oder mehr. Bestandteile, die unter den Verfahrensbedingungen schwer zu verarbeiten bzw. nicht stabil sind, sind in der Aufschlämmung vorzugsweise nicht enthalten, können aber zu einem späteren Zeitpunkt dem Waschmittelpulver separat zugesetzt werden.

Sprühgetrocknete Waschmittelpulver, die mittels der beschriebenen Verfahren herstellbar sind, können Tenside, beispielsweise in Mengen von 15 bis 30 Gew.-%, sowie Gerüststoffe, insbesondere Zeolithe, Carbonate, Phosphate und/oder Silikate in Mengen von 0 bis 25 Gew.-% enthalten. Der Wassergehalt des sprühgetrockneten Pulvers liegt vorzugsweise bei etwa 0 bis 7 Gew.-%, vorzugsweise 1 bis 5 Gew.-% und noch bevorzugter 2 bis 3 Gew.-%.

Vorzugsweise weist das sprühgetrocknete Waschmittelpulver 0 bis 10 Gew.-% Zeolithe, noch weiter bevorzugt 0 bis 5 Gew.-% Zeolithe auf. Dadurch wird ein Waschmittelpulver erhalten, das nicht nur eine geringe Dichte aufweist, sondern auch bei niedrigen Temperaturen leicht löslich ist.

Das mittels der hierin beschriebenen Verfahren erhältliche Waschmittelpulver kann somit ein vollwertiges Waschmittel sein, kann aber alternativ auch mit weiteren Bestandteilen, vorzugsweise in Partikelform, kombiniert werden, um ein vollwertiges Waschmittel zu erhalten. Die zusätzlichen Bestandteile in Partikelform können beispielsweise Enzymgranulate, Parfümmikrokapseln, Tensidpartikel, Polymer-, Füllstoff-, Bleiche-, Bleichkatalysator- oder Pufferpartikel sein.

Ein Wasch- oder Reinigungsmittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Nitrilotriessigsäure und Ethylendiamintetraessigsäure sowie Polyasparaginsäure, Polyphosphonsäuren, insbesondere Aminotris(methylenphosphonsäure), Ethylendiamintetrakis(methylenphosphonsäure) und 1-Hydroxyethan-1 , 1-diphosphonsäure, polymere Hydroxyverbindungen wie Dextrin sowie polymere (Poly-)carbonsäuren, insbesondere durch Oxidation von Polysacchariden beziehungsweise Dextrinen zugänglichen Polycarboxylate, und/oder polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im allgemeinen zwischen 5 000 und 200 000, die der Copolymeren zwischen 2 000 und 200 000, vorzugsweise 50 000 bis 120 000, jeweils bezogen auf freie Säure. Ein besonders bevorzugtes Acrylsäure-Maleinsäure-Copolymer weist eine relative Molekülmasse von 50 000 bis 100 000 auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/oder einem veresterten Vinylalkohol oder ein Kohlenhydrat enthalten. Das erste saure Monomer beziehungsweise dessen Salz leitet sich von einer monoethylenisch ungesättigten C3-C8-Carbonsäure und vorzugsweise von einer C3-C4-Monocarbonsäure, insbesondere von (Meth)-acrylsäure ab. Das zweite saure Monomer beziehungsweise dessen Salz kann ein Derivat einer C4-C8-Dicarbonsäure, wobei Maleinsäure besonders bevorzugt ist, und/oder ein Derivat einer Allylsulfonsäure, die in 2-Stellung mit einem Alkyl- oder Arylrest substituiert ist, sein. Derartige Polymere weisen im Allgemeinen eine relative Molekülmasse zwischen 1 000 und 200 000 auf. Weitere bevorzugte Copolymere sind solche, die als Monomere Acrolein und Acrylsäure/Acrylsäuresalze beziehungsweise Vinylacetat aufweisen. Die organischen Buildersubstanzen können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen Mitteln eingesetzt.

Als wasserlösliche anorganische Buildermaterialien kommen insbesondere polymere Alkaliphosphate, die in Form ihrer alkalischen neutralen oder sauren Natrium- oder Kaliumsalze vorliegen können, in Betracht. Beispiele hierfür sind Tetranatriumdiphosphat, Dinatriumdihydrogendiphos-phat, Pentanatriumtriphosphat, sogenanntes aus Natrium- und Kaliumsalzen. Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Natriumalumosilikate in Waschmittelqualität, insbesondere Zeolith A, P und gegebenenfalls X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 $\mu$m auf und bestehen vorzugsweise zu wenigstens 80 Gew.-% aus Teilchen mit einer Größe unter 10 $\mu$m. Ihr Calciumbindevermögen, das nach den Angaben der deutschen Patentschrift DE 24 12 837 bestimmt werden kann, liegt in der Regel im Bereich von 100 bis 200 mg CaO pro Gramm. Geeignete Substitute beziehungsweise Teilsubstitute für das genannte Alumosilikat sind kristalline Alkalisilikate, die allein oder im Gemisch mit amorphen Silikaten vorliegen können. Die als Gerüststoffe brauchbaren Alkalisilikate weisen vorzugsweise ein molares Verhältnis von Alkalioxid zu $SiO_2$ unter 0,95, insbesondere von 1 :1, 1 bis 1 : 12 auf und können amorph oder kristallin vorliegen. Bevorzugte Alkalisilikate sind die Natriumsilikate, insbesondere die amorphen Natriumsilikate, mit einem molaren Verhältnis $Na_2O:SiO_2$ von 1 :2 bis 1 :2,8.

Die Waschmittelbestandteile sind generell die typischerweise in festen Waschmitteln verwendeten Bestandteile, wie sie beispielweise in der DE 10349388 A1, DE 10349388B4, DE102008015396A1, oder DE102008015110A1, deren Inhalt hierin durch Bezugnahme in seiner Gesamtheit eingeschlossen ist, beschrieben werden. Insbesondere umfassen die Waschmittelbestandteile lösliche Gerüststoffe (Builder), wie sie in der DE 10349388 A1, DE 10349388B4, DE102008015396A1 oder DE102008015110A1 beschrieben werden.

Alle Sachverhalte, Gegenstände und Ausführungsformen, die für die erfindungsgemäßen Verfahren beschrieben sind, sind auch auf die hergestellten sprühgetrockneten Waschmittelpulver anwendbar. Daher wird an dieser Stelle ausdrücklich auf die Offenbarung an entsprechender Stelle verwiesen mit dem Hinweis, dass diese Offenbarung auch für die vorstehend beschriebenen erfindungsgemäßen Waschmittelpulver gilt.

Die Erfindung betrifft weiterhin auch Sprühtrocknungsanlagen. Dabei sind alle Sachverhalte, Gegenstände und Ausführungsformen, die für die erfindungsgemäßen Verfahren beschrieben sind, auch auf die Sprühtrocknungsanlage anwendbar. Daher wird an dieser Stelle ausdrücklich auf die Offenbarung an entsprechender Stelle verwiesen mit dem Hinweis, dass diese Offenbarung auch für die vorstehend beschriebenen Sprühtrocknungsanlagen gilt.

Somit betrifft die vorliegende Erfindung eine Sprühtrocknungsanlage, die einen Mixer, eine Hochdruckpumpe, einen Pulsationsdämpfer (Windkessel), eine Sprühdüse und einen Sprühturm umfasst, wobei ein Rohrleitungssystem von dem Mixer zur der Hochdruckpumpe und von der Pumpe zu der Sprühdüse führt, wobei die Sprühdüse mit ihrer Öffnung in den Innenraum des umfasst, wobei ein Rohrleitungssystem von dem Mixer zur der Hochdruckpumpe und von der Pumpe zu der Sprühdüse führt, wobei die Sprühdüse mit ihrer Öffnung in den Innenraum des Sprühturms hineinreicht, dadurch gekennzeichnet, dass an einer der Hochdruckpumpe nachgeschalteten Stelle vor einem oder direkt in einen Pulsationsdämpfer (Windkessel) eine Gaszuleitung angebracht ist.

Der in dieser Beschreibung verwendete unbestimmte Artikel Singular im Zusammenhang mit der Beschreibung der Sprühtrocknungsanlage ist als "mindestens ein" zu verstehen.

In bestimmten Ausführungsformen ist die Sprühtrocknungsanlage für die Durchführung der in den Ansprüchen definierten Verfahren geeignet.

In weiteren Ausführungsformen der Sprühtrocknungsanlage umfasst die Gaszuleitung einen Gasverteiler.

In einigen Ausführungsformen der Sprühtrocknungsanlage ist der Pulsationsdämpfer direkt nach der Hochdruckpumpe angebracht.

In verschiedenen Ausführungsformen der Sprühtrocknungsanlage ist der Sprühturm ein Gegenstromsprühturm.

Beispiele

Beispiel 1:

Für die Messung der Partikelgrößenverteilung wird wie folgt vorgegangen:Geräte:

Siebanalysengerät (z. B. Siebtechnik, Typ "Lavib 52/l"; Retsch Typ "VE 1000" oder "AS200")
Siebsätze entsprechend der zu untersuchenden Probensubstanz
Zeitschaltuhr
Pinsel
Wägeschalen
Laborwaage, Genauigkeit: 1 g

Vorgehensweise

Ein Siebsatz wird zusammengesetzt in der Weise, dass die Maschenweite nach unten hin abnimmt. Dieser Satz wird mit einem Abschlussboden versehen und in die Prüfsiebmaschine eingesetzt. Die Stellschrauben der Führung sind so einzustellen, dass der Siebsatz fest in der Apparatur verankert ist. 80 - 120 g Probensubstanz (bei Schüttdichten unter 200 g/l ca. 50 g Probe) werden in einer Wägeschale abgewogen und auf das oberste Sieb gegeben. Der Siebsatz wird dann mit einem Deckel verschlossen und die Apparatur mit der Zeitschaltuhr eingeschaltet. Folgende Parameter gelten für den Siebvor-gang:

Dauer: 2 min

Intervall: 10 s

Schwingungsamplitude:2 mm (beim AS200)

Die unterschiedlichen Fraktionen einschließlich der in den Siebmaschen hängengebliebenen Teilchen werden in Wägeschalen überführt (nötigenfalls einen Pinsel zu Hilfe nehmen) und ausgewogen. Die auf dem Abschlußboden befindliche Fraktion (Teilchen < 0,1 mm) wird ebenfalls gewogen.

Auswertung und Angabe des Ergebnisses

Die Anteile der verschiedenen Korngrößenfraktionen an der Gesamtprobe werden berechnet wie folgt:

$$F = s \times 100/E$$

f = Anteil der einzelnen Fraktion an der Gesamtprobe [Gew.-%]

s = Masse der einzelnen Fraktion [g]

E = Gesamtprobenmenge [g]

Die Summe aller Fraktionen muss gleich 100 % sein innerhalb einer Toleranz von ± 1%.
Die Schüttdichte wird bestimmt durch Wägung von genau 1000 ml des zu untersuchenden Materials.

Beispiel 2:

Die Zusammensetzung A wurde in einem konventionellen Sprühtrocknungsverfahren hergestellt. Alle Mengenangaben sind in Gew.-% bezogen auf das Gesamtgewicht der Zusammensetzung.

| Zusammensetzung A: | |
|---|---|
| Acryl-Maleinsäure Copolymer-Na Salz | 3,25 |
| Lineares Alkylbenzolsulfonat | 13,74 |
| Seife | 2,71 |
| Fettsäurealkoholethoxylat C12-C18 + 4 EO | 0,46 |
| Fettsäurealkoholethoxylat C12-C18 + 7 EO | 4,40 |
| Zeolith A (Natriumaluminiumsilikat) | 25,80 |
| Natriumsilikat | 0,18 |
| Natriumsulfat | 44,08 |
| Rest | 1,06 |
| Wasser | 4,32 |

Zur Herstellung der Rezeptur A wurden folgende Prozessbedingungen im Sprühtrockner (Gegenstrom) gewählt:
Feststoffgehalt in der Aufschlämmung = 62%
Trocknungslufttemperatur (Turmeingang) = 290°C
Trocknungslufttemperatur (Filter, Turmausgang) = 83°C

Gasvolumen pro Stunde, das über einen Gasverteiler in den Windkessel eingeleitet wird = siehe Tabelle 1

Tabelle 1: Partikelgrößenverteilung in Gew.-%

| Gasmenge | <0,1mm | 0,1mm | 0,2mm | 0,4mm | 0,6mm | 0,8mm | >1,6mm |
|---|---|---|---|---|---|---|---|
| 0 m$^3$/h | 4 | 4,5 | 17 | 21,8 | 29 | 22 | 1,9 |
| 50 m$^3$/h | 4,9 | 4 | 25,7 | 25,9 | 22 | 16,5 | 1,1 |
| 100 m$^3$/h | 3,5 | 5,6 | 33,2 | 30,3 | 19,4 | 7,9 | 0,1 |
| 150 m$^3$/h | 4,7 | 3,9 | 49,7 | 26,3 | 11,7 | 3,6 | 0,1 |

Durch die unterschiedlichen Gasmengen in der Waschmittelaufschlämmung resultierten Qualitätsunterschiede bei den erhaltenen Pulvern. Neben den geringeren Schüttgewichten zeigte sich bei den Siebanalysen eine deutliche Verengung der Partikelgrößenverteilung bei höheren Gaszusätzen.

Mit der Einleitung von Luft ergaben sich folgende Schüttgewichte:

| | |
|---|---|
| 50 m$^3$/h | 340g/l |
| 100 m$^3$/h | 320g/l |
| 150 m$^3$/h | 291g/l |

Beispiel 3:

Die Zusammensetzung B wurde in einem konventionellen Sprühtrocknungsverfahren hergestellt. Alle Mengenangaben sind in Gew.-% bezogen auf das Gesamtgewicht der Zusammensetzung.

Zusammensetzung B:

| | |
|---|---|
| Lineares Alkylbenzolsulfonat | 13,79 |
| Fettsäurealkohol C12-C18 + 7 EO | 2,67 |
| Natriumcarbonat | 23,34 |
| Natriumsilikat | 7,66 |
| Natrium 1-Hydroxyethan-1,1-diphosphonat (HEDP-4Na) | 1,35 |
| Polyacrylat | 4,76 |
| Carboxymethylcellulose CMC | 1,91 |
| Farbstoff blau | 0,07 |
| Aufheller | 0,22 |
| Natriumsulfat | 38,04 |
| Salze | 0,31 |
| Wasser | 5,88 |

Es ergaben sich Schüttgewichte von 430-440 g/l ohne den Zusatz von Gas. Mit einer Einleitung von 30m$^3$/h Luft über den Windkessel bei einer Turmpulverausbeute von 8000 kg/h ergaben sich Pulver mit Schüttgewichten von 390-400 g/l.

**Patentansprüche**

1. Verfahren zur Herstellung von sprühgetrocknetem Waschmittelpulver, wobei das Verfahren die folgenden Schritte umfasst:

a) Herstellen einer wässrigen Waschmittelaufschlämmung in einem Mixer,
b) Überführen der wässrigen Waschmittelaufschlämmung aus dem Mixer in ein Rohrleitungssystem, welches zu einer Hochdruckpumpe und von der Pumpe zu einer Sprühdüse führt,
c) Einleiten von Gasen in die im Rohrleitungssystem befindliche wässrige Waschmittelaufschlämmung an einer der Hochdruckpumpe nachgeschalteten Stelle vor einem oder direkt in einen Pulsationsdämpfer (Windkessel),
d) Sprühen der wässrigen, gashaltigen Waschmittelaufschlämmung durch die Sprühdüse in einen Sprühturm, und

e) Sprühtrocknen der gashaltigen Waschmittelaufschlämmung, um ein sprühgetrocknetes Waschmittelpulver zu erhalten.

2. Das Verfahren nach Anspruch 1, wobei die Hochdruckpumpe einen Druck im Bereich von 10 - 100 bar im Rohrleitungssystem zwischen der Hochdruckpumpe und der Sprühdüse erzeugt.

3. Das Verfahren nach Anspruch 1 oder 2, wobei das Gas ein stickstoff-haltiges Gas, $N_2$, $O_2$, Stickstoffdioxid, Argon oder Helium, vorzugsweise atmosphärische Luft ist.

4. Das Verfahren nach einem der Ansprüche 1 bis 3, wobei der Pulsationsdämpfer in dem Rohrleitungssystem direkt nach der Hochdruckpumpe angeordnet ist.

5. Das Verfahren nach einem der Ansprüche 1 bis 4, wobei der Feststoffanteil der wässrigen Waschmittelaufschlämmung mehr als 65 Gew.-%, vorzugsweise zwischen 65 - 75 Gew.-% beträgt.

6. Das Verfahren nach einem der Ansprüche 1 bis 5, wobei das Gas durch einen Gasverteiler in den Pulsationsdämpfer eingeleitet wird.

7. Das Verfahren nach einem der Ansprüche 1 bis 6, wobei
das Gas mit einem Druck, welcher 3 - 30 bar über dem Maximaldruck der wässrigen Waschmittelaufschlämmung im Rohrleitungsbereich zwischen Hochdruckpumpe und Sprühdüse liegt, in die wässrige Waschmittelaufschlämmung eingeleitet wird.

8. Das Verfahren nach einem der Ansprüche 1 bis 7, wobei die wässrige Waschmittelaufschlämmung ein oder mehrere Waschmittelbestandteile ausgewählt aus Tensiden und Tensidmischungen, Gerüststoffen, Bleichmitteln, Enzymen, Elektrolyten, nichtwässrigen Lösungsmitteln, pH-Stellmitteln, Parfümen, Parfümträgern, Fluoreszenzmitteln, Farbstoffen, Hydrotropen, Schauminhibitoren, Silikonölen, Antiredepositionsmitteln, Vergrauungsinhibitoren, Einlaufverhinderern, Knitterschutzmitteln, Farbübertragungsinhibitoren, antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- und Imprägniermitteln, Quell- und Schiebefestmitteln, weichmachenden Komponenten sowie UV-Absorbern enthält.

9. Sprühtrocknungsanlage, die einen Mixer, eine Hochdruckpumpe, einen Pulsationsdämpfer (Windkessel), eine Sprühdüse und einen Sprühturm umfasst, wobei ein Rohrleitungssystem von dem Mixer zur der Hochdruckpumpe und von der Pumpe zu der Sprühdüse führt, wobei die Sprühdüse mit ihrer Öffnung in den Innenraum des Sprühturms hineinreicht, **dadurch gekennzeichnet, dass** an einer der Hochdruckpumpe nachgeschalteten Stelle vor einem oder direkt in einen Pulsationsdämpfer (Windkessel) eine Gaszuleitung angebracht ist, wobei insbesondere die Anlage für die Durchführung der Verfahren gemäß Anspruch 1-8 geeignet ist und/oder wobei insbesondere die Gaszuleitung einen Gasverteiler umfasst und/oder wobei insbesondere der Pulsationsdämpfer direkt nach der Hochdruckpumpe angebracht ist und/oder wobei insbesondere der Sprühturm ein Gegenstromsprühturm ist.

## Claims

1. A method for preparing spray-dried detergent powder, wherein the method comprises the following steps:

a) preparing an aqueous detergent suspension in a mixer,
b) transferring the aqueous detergent suspension from the mixer to a pipe system which leads to a high-pressure pump and from the pump to a spray nozzle,
c) introducing gases into the aqueous detergent suspension located in the pipe system at a point downstream of the high-pressure pump, ahead of or directly in a pulsation damper (air chamber),
d) spraying the aqueous, gaseous detergent suspension into a spray tower by means of the spray nozzle, and
e) spray-drying the gaseous detergent suspension in order to obtain a spray-dried detergent powder.

2. The method according to claim 1, wherein the high-pressure pump generates a pressure in the range of from 10 to 100 bar in the pipe system between the high-pressure pump and the spray nozzle.

3. The method according to claim 1 or 2, wherein the gas is a nitrogen-containing gas, $N_2$, $O_2$, nitrogen dioxide, argon

or helium, preferably atmospheric air.

**4.** The method according to one of claims 1 to 3, wherein the pulsation damper is arranged in the pipe system immediately after the high-pressure pump.

**5.** The method according to one of claims 1 to 4, wherein the solid content of the aqueous detergent suspension is greater than 65 wt.%, preferably between 65 and 75 wt.%.

**6.** The method according to one of claims 1 to 5, wherein the gas is introduced into the pulsation damper by means of a gas distributor.

**7.** The method according to one of claims 1 to 6, wherein
the gas is introduced into the aqueous detergent suspension in the pipe region between the high-pressure pump and the spray nozzle at a pressure which is 3 to 30 bar above the maximum pressure of the aqueous detergent suspension.

**8.** The method according to one of claims 1 to 7, wherein the aqueous detergent suspension contains one or more detergent components selected from surfactants and surfactant mixtures, builders, bleaching agents, enzymes, electrolytes, non-aqueous solvents, pH adjusting agents, perfumes, perfume carriers, fluorescing agents, dyes, hydrotropic substances, foam inhibitors, silicone oils, anti-redeposition agents, graying inhibitors, anti-shrink agents, anti-crease agents, dye transfer inhibitors, antimicrobial active ingredients, germicides, fungicides, antioxidants, preservatives, corrosion inhibitors, antistatic agents, bittering agents, ironing aids, repellents and impregnating agents, anti-swelling and anti-slip agents, softening components and UV absorbers.

**9.** A spray-drying installation comprising a mixer, a high-pressure pump, a pulsation damper (air chamber), a spray nozzle and a spray tower, a pipe system leading from the mixer to the high-pressure pump and from the pump to the spray nozzle, the opening of the spray nozzle opening into the interior of the spray tower, **characterized in that** a gas supply line is attached at a point downstream of the high-pressure pump, ahead of or directly in a pulsation damper (air chamber), the installation being in particular suitable for carrying out the methods according to claims 1 to 8, and/or the gas supply line comprising in particular a gas distributor, and/or the pulsation damper being attached in particular immediately after the high-pressure pump, and/or the spray tower being in particular a counterflow spray tower.

**Revendications**

**1.** Procédé de fabrication de poudre de détergent séchée par pulvérisation, le procédé comprenant les étapes suivantes :

a) fabrication d'une suspension aqueuse de détergent dans un mélangeur,
b) transfert de la suspension aqueuse de détergent hors du mélangeur dans un système de canalisations qui la conduit à une pompe à haute pression, et de la pompe à une buse de pulvérisation,
c) introduction de gaz dans la suspension aqueuse de détergent qui se trouve dans le système de canalisations, en aval de la pompe haute pression, en amont ou directement dans un amortisseur de pulsations (réserve d'air),
d) pulvérisation de la suspension aqueuse de détergent contenant du gaz à travers la buse de pulvérisation dans une tour de pulvérisation, et
e) séchage par pulvérisation de la suspension aqueuse de détergent contenant du gaz pour obtenir une poudre de détergent séchée par pulvérisation.

**2.** Procédé selon la revendication 1, où la pompe haute pression génère une pression comprise entre 10 et 100 bar dans le système de canalisations entre la pompe haute pression et la buse de pulvérisation.

**3.** Procédé selon la revendication 1 ou 2, où le gaz est un gaz contenant de l'azote, $N_2$, $O_2$, du dioxyde d'azote, de l'argon ou de l'hélium, de préférence de l'air atmosphérique.

**4.** Procédé selon une des revendications 1 à 3, où l'amortisseur de pulsations dans le système de canalisations est disposé directement en aval de la pompe haute pression.

**5.** Procédé selon une des revendications 1 à 4, où la teneur en matières solides de la solution aqueuse de détergent est supérieure à 65 % en poids, de préférence entre 65 et 75 % en poids.

**6.** Procédé selon une des revendications 1 à 5, où le gaz est introduit dans l'amortisseur de pulsations à travers un répartiteur de gaz.

**7.** Procédé selon une des revendications 1 à 6, où le gaz est introduit dans la suspension aqueuse de détergent avec une pression 3 à 30 bar supérieure à la pression maximale de la suspension aqueuse de détergent entre la pompe haute pression et la buse de pulvérisation.

**8.** Procédé selon une des revendications 1 à 7, où suspension aqueuse de détergent contient au moins un composant de détergent choisi parmi des tensioactifs et des mélanges de tensioactifs, des adjuvants, des agents de blanchiment, des enzymes, des électrolytes, des solvants non-aqueux, des tampons de pH, des parfums, des bases pour parfum, des agents de fluorescence, des colorants, des hydrotropes, des inhibiteurs de mousses, des huiles de silicone, des agents antiredéposition, des inhibiteurs de grisaillement, des inhibiteur de lessivage, des antirides, des inhibiteurs de transfert de couleur, des agents antimicrobiens, des germicides, des fongicides, des antioxydants, des conservateurs, des inhibiteurs de corrosion, des agents antistatiques, des amérisants, des produits d'aide au repassage, des insectifuges et des imperméabilisants, des agents anti-gonflement et anti-éraillage, des adoucissants ainsi que des absorbeurs UV.

**9.** Dispositif de séchage par pulvérisation comprenant un mélangeur, une pompe haute pression, un amortisseur de pulsations (réserve d'air), une buse de pulvérisation et une tour de pulvérisation, dans lequel un système de conduites système de canalisations va du mélangeur à la pompe haute pression et de la pompe à la buse de pulvérisation, la buse de pulvérisation débouchant par son ouverture dans l'espace interne de la tour de pulvérisation, **caractérisé en ce qu'**une conduite de gaz est raccordée en aval de la pompe haute pression en amont ou directement dans un amortisseur de pulsations (réserve d'air), où l'installation convient particulièrement à la réalisation du procédé selon une des revendications 1 à 8 et/ou où, en particulier, la conduite de gaz comprend un répartiteur de gaz et/ou où, en particulier, l'amortisseur de pulsations est raccordé directement en aval de la pompe haute pression et/ou où, en particulier, la tour de pulvérisation est une tour de pulvérisation à contre-courant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013181205 A1
- DE 2519655
- DE 102005063064 A1
- EP 763594 A1
- DE 2412837
- DE 10349388 A1
- DE 10349388 B4
- DE 102008015396 A1
- DE 102008015110 A1